# EUROPEAN PATENT APPLICATION

(11) **EP 3 508 891 A1**
(43) Date of publication of application: **10.07.2019**
(21) Application number: 17845836.0
(22) Date of filing: 16.06.2017
(51) Int. Cl.: G02B 5/20

(54) **COLOR CONVERSION ELEMENT**

(30) Priority: 30.08.2016 JP 2016168456
(71) Applicant: Panasonic Intellectual Property Management Co., Ltd., Osaka-shi, Osaka 540-6207 (JP)
(72) Inventor: HIRANO, Toru, Osaka-shi, Osaka 540-6207 (JP); AKETA, Takanori, Osaka-shi, Osaka 540-6207 (JP); OISHI, Koki, Osaka-shi, Osaka 540-6207 (JP)
(74) Representative: Müller-Boré & Partner Patentanwälte PartG mbB
(86) International application number: PCT/JP2017/022315
(87) International publication number: WO 2018/042825

(57) **Abstract**

A color conversion element (1) includes: a substrate (2), a phosphor layer (3) disposed above one principal surface (22) of the substrate (2), and a joining portion (4) interposed between the substrate (2) and the phosphor layer (3) for joining the substrate (2) and the phosphor layer (3) using metal. The phosphor layer (3) includes individual pieces (31) that are sheet-shaped and planarly arranged. The individual pieces (31) each include at least one type of phosphor.

## Description

### TECHNICAL FIELD

The present invention relates to a color conversion element in which a phosphor layer is stacked above a substrate.

### BACKGROUND ART

For example, technology for joining a phosphor layer and a substrate using metal to improve heat dissipation of a phosphor wheel (color conversion element) used in a projection apparatus, such as a projector, has been disclosed (for example, see Patent Literature (PTL)1).

### Citation List

### Patent Literature

PTL1: Japanese Unexamined Patent Application Publication No. 2015-230760

### SUMMARY OF THE INVENTION

### TECHNICAL PROBLEMS

In the manufacturing of a color conversion element, a plate-shaped phosphor layer may be joined to a substrate using metal. In such cases, the heat produced when the phosphor layer is joined to the substrate using metal transfers to the phosphor layer and the substrate. The difference in thermal expansion coefficient between the phosphor layer and the substrate may cause defects, such as the warping of the color conversion element and the cracking and the peeling of the metal joining portion.

Accordingly, an object of the present invention is to reduce the occurrence of a defect resulting from joining a phosphor layer and a substrate using metal.

### SOLUTIONS TO PROBLEMS

A color conversion element according to an aspect of the present invention includes: a substrate; a phosphor layer disposed above one principal surface of the substrate; and a joining portion interposed between the substrate and the phosphor layer for joining the substrate and the phosphor layer using metal. The phosphor layer includes individual pieces that are sheet-shaped and planarly arranged, the individual pieces each including at least one type of phosphor.

### ADVANTAGEOUS EFFECT OF INVENTION

According to the present invention, it is possible to reduce the occurrence of a defect resulting from joining a phosphor layer and a substrate using metal.

### BRIEF DESCRIPTION OF DRAWINGS

FIG. 1 is a schematic diagram schematically illustrating the configuration of a color conversion element according to an embodiment.
FIG. 2 is a cross-sectional view of the color conversion element taken along the line II-II in FIG. 1.
FIG. 3 is a front view illustrating a state of the color conversion element according to the embodiment during manufacturing.
FIG. 4 is a cross-sectional view of the color conversion element taken along the line IV-IV in FIG. 3.
FIG. 5 is a front view illustrating a state of the color conversion element according to the embodiment during manufacturing.
FIG. 6 is a cross-sectional view schematically illustrating the configuration of a color conversion element according to Variation 1.
FIG. 7 is a cross-sectional view schematically illustrating the configuration of a color conversion element according to Variation 2.
FIG. 8 is a schematic diagram schematically illustrating the configuration of a color conversion element according to Variation 4.

### DESCRIPTION OF EXEMPLARY EMBODIMENTS

Hereinafter, a color conversion element according to embodiments of the present invention will be described with reference to the drawings. Note that the embodiments described below illustrate particular preferable examples according to the present invention. Therefore, the numerical values, shapes, materials, elements, the arrangement and the connection of the elements, and the like described in the following embodiments are mere examples, and thus are not intended to limit the present invention. Accordingly, among the elements in the following exemplary embodiments, elements not recited in any of the independent claims defining the broadest concept of the present disclosure are described as arbitrary elements.

Note that the drawings are schematic diagrams, and do not necessarily provide strictly accurate illustrations. Throughout the drawings, the same reference numeral is given to the same element.

Hereinafter, an embodiment will be described.

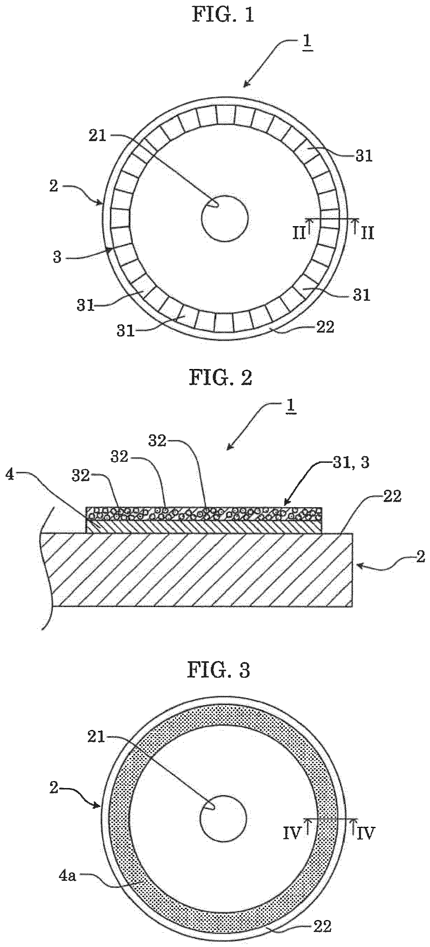

FIG. 1 is a schematic diagram schematically illustrating the configuration of a color conversion element according to an embodiment. FIG. 2 is a cross-sectional view of the color conversion element taken along the line II-II in FIG. 1.

Color conversion element 1 is a phosphor wheel used in a projection apparatus, such as a projector. The projection apparatus includes, as a light source, a semiconductor laser element which emits laser light having a wavelength of violet to blue (430 nm to 490 nm) to color conversion element 1. Color conversion element 1 uses, as excitation light, laser light emitted from the light source to emit white light. Hereinafter, color conversion element 1 will be described in detail.

As illustrated in FIG. 1 and FIG. 2, color conversion element 1 includes substrate 2, phosphor layer 3, and joining portion 4.

Substrate 2 is, for instance, a circular substrate when seen in plan view and includes through hole 21 in the center portion of substrate 2. A revolving shaft in the projection apparatus which is inserted into through hole 21 allows substrate 2 to rotate.

Substrate 2 is a substrate which has a thermal conductivity higher than the thermal conductivity of phosphor layer 3. In this manner, heat conducted from phosphor layer 3 can be efficiently dissipated from substrate 2. Specifically, substrate 2 includes a metallic material, such as Al, Al₂O₂, AlN, Fe, and Ti. Note that as long as the thermal conductivity of substrate 2 is higher than that of phosphor layer 3, substrate 2 may include a material other than the metallic material. Examples of such a material other than the metallic material include Si, ceramics, sapphire, graphite, and the like. The thermal expansion coefficient of substrate 2 when substrate 2 includes each of materials is as follows: 12 ppm/K when substrate 2 includes Al; 7 ppm/K when substrate 2 includes Al₂O₃; 4.6 ppm/K when substrate 2 includes AlN; 12 ppm/K when substrate 2 includes Fe, 8.4 ppm/K when substrate 2 includes Ti; 3 ppm/K when substrate 2 includes Si; and 2.3 ppm/K when substrate 2 includes graphite.

Phosphor layer 3 is disposed above principal surface 22, which is one of the principal surfaces of substrate 2, with joining portion 4 interposed therebetween. Phosphor layer 3 includes, in a dispersed state, particles of a phosphor (phosphor particles 32) which emit light when excited by laser light, for instance. Phosphor particles 32 emit light when emitted by laser light. Accordingly, the outer principal surface of phosphor layer 3 is the light emitting surface. In addition, the thermal expansion coefficient of phosphor layer 3 is from 7 ppm/K to 10 ppm/K.

Phosphor layer 3 has, as a whole, an annular shape when seen in plan view. This phosphor layer 3 includes sheet-shaped individual pieces 31 which are annularly arranged. Individual pieces 31 have the same shape and type. Specifically, each of individual pieces 31 has a trapezoid shape when seen in plan view. Adjacent individual pieces 31 are disposed without a space therebetween. Individual piece 31 includes at least one type of phosphor particles 32.

In the present embodiment, individual piece 31 emits white light and includes particles of three types of phosphors in a suitable proportion. The three types of phosphors are a red phosphor which emit red light when emitted by laser light, a yellow phosphor which emit yellow light when emitted by laser light, and a green phosphor which emit green light when emitted by laser light.

Although the types and the characteristics of phosphor particles 32 are not particularly limited, phosphor particles having high heat resistance may be used, since relatively high-output laser light is used as excitation light. In addition, although the type of a base material which holds phosphor particles 32 in a dispersed state is not particularly limited, a base material having a high light transmittance for the wavelength of excitation light and the wavelength of light emitted from phosphor particles 32 may be used. Specifically, an example of such a base material includes a material which includes glass or ceramics. Note that phosphor layer 3 may be a polycrystalline substance or a monocrystalline substance which includes one type of phosphor.

In addition, a reflecting layer (not shown in the drawings) for reflecting laser light and light emitted from phosphor particles 32 is stacked on the back surface (a principle surface facing joining portion 4) of each of individual pieces 31. The reflecting layer includes a material having a high reflectance to laser light and the light emitted from phosphor particles 32. Specifically, examples of a material having a high reflectance include metallic materials, such as Ag and Al. The reflecting layer is formed by forming a film of the metallic material on the back surface of each of individual pieces 31, using a well-known film forming method, such as sputtering or plating.

Joining portion 4 is a joining layer interposed between phosphor layer 3 and substrate 2 for joining phosphor layer 3 and substrate 2 using metal. Joining portion 4 includes a metallic material capable of joining phosphor layer 3 and substrate 2. Examples of such a metallic material capable of joining phosphor layer 3 and substrate 2 include an Au-Sn-based solder material, an Au-Ge-based solder material, an Sn-Ag-Cu-based solder material, and Ag nanoparticles, for instance.

Here, a state of color conversion element 1 before color conversion element 1 is assembled will be described.

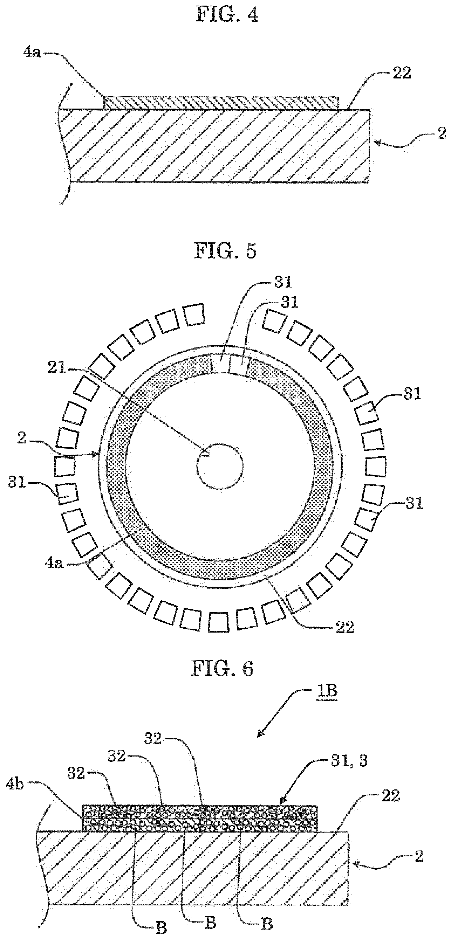

FIG. 3 is a front view illustrating a state of the color conversion element according to the embodiment during manufacturing. FIG. 4 is a cross-sectional view of the color conversion element taken along the line IV-IV in FIG. 3.

As illustrated in FIG. 3 and FIG. 4, solder material 4a which becomes joining portion 4 is integrally formed with substrate 2 in advance by the time of manufacturing color conversion element 1. Solder material 4a has a continuous annular shape that corresponds to the area where individual pieces 31 are to be arranged.

FIG. 5 is a front view illustrating a state of the color conversion element according to the embodiment during manufacturing. Specifically, FIG. 5 illustrates individual pieces 31 in a state when individual pieces 31 are arranged. Note that although FIG. 5 illustrates radially arranged individual pieces 31 before individual pieces 31 are arranged above substrate 2, individual pieces 31 are actually collectively stored in a predetermined place, and conveyed one at a time to predetermined positions above substrate 2. After individual pieces 31 are arranged in respective predetermined positions, phosphor layer 3 obtains an annular shape as illustrated in FIG. 1.

Subsequently, phosphor layer 3 and substrate 2 are joined by heating and melting solder material 4a. When phosphor layer 3 and substrate 2 are joined using metal, both phosphor layer 3 and substrate 2 are thermally deformed as a result of the heat that has also been transferred to phosphor layer 3 and substrate 2. Since the amount of thermal deformation depends on the thermal expansion coefficient of phosphor layer 3 and substrate 2, a difference in the amount of thermal deformation occurs between phosphor layer 3 and substrate 2. Consequently, stress caused by such difference acts on phosphor layer 3. However, since phosphor layer 3 is a collection of individual pieces 31, the stress can be distributed among individual pieces 31. With this, the amount of warping of color conversion element 1 can be made small. In addition, although the residual stress may cause the cracking and the peeling of joining portion 4 when residual stress is present, the residual stress is made small because of the stress distribution. With this, the cracking and the peeling of joining portion 4 can be reduced.

### [Operation of projection apparatus]

Next, the operation of a projection apparatus will be described.

When laser light is emitted from the light source in a projection apparatus, the laser light is received by phosphor layer 3 while color conversion element 1 is rotating. A portion of the laser light directly shines on phosphor particles 32 in phosphor layer 3. In addition, another portion of the laser light that does not directly shine on phosphor particles 32 is reflected by the reflecting layer and shines on phosphor particles 32. Phosphor particles 32 convert the laser light that has reached phosphor particles 32 into white light and emit the white light. A portion of the white light emitted from phosphor particles 32 is directly emitted out of phosphor layer 3. Another portion of the white light emitted from phosphor particles 32 is also emitted out of phosphor layer 3 by being reflected by the reflecting layer.

Here, both phosphor layer 3 and substrate 2 are thermally deformed because phosphor layer 3 and substrate 2 are heated when phosphor layer 3 receives laser light, but the stress caused at this time is also distributed among individual pieces 31. Consequently, even when the laser light is received by phosphor layer 3, it is possible to reduce the warping amount of color conversion element 1 and the cracking and the peeling of joining portion 4.

### [Effects, etc.]

As described above, according to the present embodiment, color conversion element 1 includes substrate 2, phosphor layer 3 disposed above principal surface 22, which is one of the principal surfaces of substrate 2, and joining portion 4 interposed between substrate 2 and phosphor layer 3 for joining substrate 2 and phosphor layer 3 using metal. Phosphor layer 3 includes individual pieces 31 that are sheet-shaped and planarly arranged, and individual pieces 31 each include at least one type of phosphor (phosphor particles 32).

With this configuration, the stress caused when phosphor layer 3 and substrate 2 are heated can be distributed because phosphor layer 3 includes individual pieces 31 which are planarly arranged. In this manner, it is possible to reduce the warping amount of color conversion element 1 and the cracking and the peeling of joining portion 4 when substrate 2 and phosphor layer 3 are joined using metal or when laser light is received by phosphor layer 3. Consequently, it is possible to reduce the occurrence of a defect resulting from joining substrate 2 and phosphor layer 3 using metal.

In addition, individual pieces 31 have the same shape.

With this configuration, it is possible to standardize the manufacture of individual pieces 31 because individual pieces 31 have the same shape. Consequently, the manufacturing efficiency of color conversion element 1 can be improved.

Note that the present embodiment described above exemplifies the case where individual piece 31 has a trapezoid shape when seen in plan view, but individual piece 31 can have any shape as long as individual piece 31 is sheet-shaped. Examples of individual piece 31 in other shape when seen in plan view are a quadrilateral, a triangle, and other polygons, for instance.

In addition, the present embodiment described above exemplifies the case where phosphor layer 3 includes individual pieces 31 which, as a whole, emit white light. However, in the case where a phosphor layer emits light in multiple colors, portions of phosphor layer 3 each of which emits one color is to include the same type of individual pieces. For example, a phosphor layer that includes three types of phosphor layers, such as a red phosphor layer, a green phosphor layer, and a blue phosphor layer, which are planarly arranged, is expected. The red phosphor layer includes the same type of individual pieces each of which includes a red phosphor. The green phosphor layer includes the same type of individual pieces each of which includes a green phosphor. The blue phosphor layer includes the same type of individual pieces each of which includes a blue phosphor.

In addition, individual pieces 31 are planarly arranged.

Here, if a phosphor layer is, as a whole, an integrally formed layer and has an annular shape when seen in plan view, the phosphor layer is weak against stress concentration, and thus the above-mentioned defects are likely to occur. However, if the phosphor layer is like phosphor layer 3 in the present embodiment which includes individual pieces 31 that are annularly arranged, it is possible to obtain a high stress release effect because the stress can be distributed among individual pieces 31.

### [Variation 1]

Next, Variation 1 will be described.

FIG. 6 is a cross-sectional view schematically illustrating the configuration of a color conversion element according to Variation 1. Specifically, FIG. 6 corresponds to FIG. 2. Note that in subsequent descriptions, the same reference numeral is given to a component equivalent to a component of color conversion element 1, and descriptions for the component is omitted. The following only describes the points different from the embodiment.

The above embodiment has exemplified and described the case where joining portion 4 is a metal joining portion which includes solder material 4a. However, Variation 1 describes joining portion 4b which is a solid metal joining portion.

Specifically, joining portion 4b of color conversion element 1B according to Variation 1 is formed by sintering metal nanoparticles. An example of the metal nanoparticles includes silver nanoparticles, for instance. Silver nanoparticles are readily available and have excellent heat dissipation. Copper nanoparticles are expected to have the same effects as the silver nanoparticles as well. In addition, air bubbles B are formed in joining portion 4b when such metal nanoparticles are used for joining portion 4b. As such, the use of metal nanoparticles enables joining portion 4b to have a porous structure. The porous structure can be obtained by adjusting, for instance, the temperature profile conditions during curing of the metal nanoparticles and paste constituents. In addition, since joining portion 4b has a porous structure, the stress caused when phosphor layer 3 and substrate 2 are heated can be further reduced. Furthermore, since the thickness of joining portion 4b can be made greater than that of joining portion 4 which includes solder material 4a, the stress relaxation effect of joining portion 4b can be further improved.

In addition, since the reflectance of metal nanoparticles is improved by sintering the metal nanoparticles, the metal nanoparticles can also function as a reflecting layer. In other words, the reflecting layer on each of individual pieces 31 of color conversion element 1 according to the embodiment can be omitted, and thus the manufacturing efficiency of color conversion element 1B can be improved.

### [Variation 2]

Next, Variation 2 will be described.

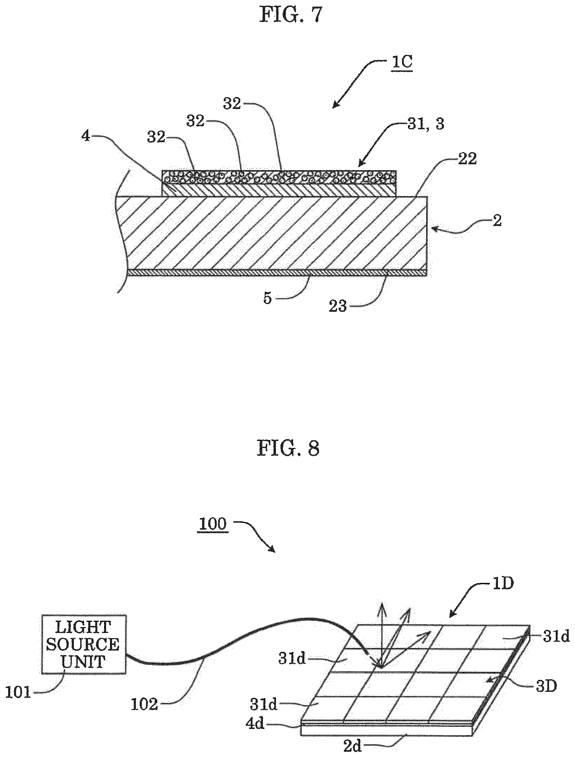

FIG. 7 is a cross-sectional view schematically illustrating the configuration of color conversion element 1C according to Variation 2. Specifically, FIG. 7 corresponds to FIG. 2.

The above embodiment has exemplified the case where the surface opposite to principal surface 22 of substrate 2 is exposed. However, Variation 2 describes the case where the surface opposite to principal surface 22 of substrate 2 (principal surface 23, which is the other principal surface of substrate 2) is covered with a film.

Specifically, hard film 5 covers the entirety of principal surface 23 which is the other principal surface of substrate 2. The hardness of hard film 5 is greater than that of substrate 2. For example, in the case where substrate 2 is made of Al, hard film 5 includes anodized aluminum, diamond-like carbon (DLC), ceramics, and the like. As described above, since hard film 5 is stacked on principal surface 23 which is the other principal surface of substrate 2, hard film 5 reduces the deformation of substrate 2. Consequently, the warping amount of color conversion element 1 can be reduced.

In addition, when hard film 5 is disposed on principal surface 23, which is the other principal surface of substrate 2, hard film 5 obtains a surface having unevenness after hard film 5 is disposed. In this manner, the surface area can be enlarged, thereby improving the heat dissipation of substrate 2.

### [Variation 3]

In the above embodiment, the relationship between substrate 2 and phosphor layer 3 regarding the thermal expansion coefficient has not been described. In Variation 3, a suitable relationship between substrate 2 and phosphor layer 3 regarding the thermal expansion coefficient will be described. The suitable relationship is a relationship in which the thermal expansion coefficient of substrate 2 is less than or equal to the thermal expansion coefficient of phosphor layer 3. For example, in the case where the thermal expansion coefficient of phosphor layer 3 is 8 ppm/K, the thermal expansion coefficient of substrate 2 may be less than or equal to 8 ppm/K. Specifically, substrate 2 which includes a material having the thermal expansion coefficient less than or equal to 8 ppm/K (Al₂O₃: 7 ppm/K, AlN: 4.6 ppm/K, Si: 3 ppm/K, graphite: 2.3 ppm/K) is used.

Since substrate 2 which satisfies such a relation is used, the amount of thermal deformation of substrate 2 is to be less than or equal to the amount of thermal deformation of phosphor layer 3. In this manner, the amount of thermal deformation of substrate 2 can be reduced, and the warping amount of color conversion element 1 can be reduced as well.

### [Variation 4]

The above embodiment has exemplified and described the case where color conversion element 1 is applied to a projection apparatus, but the color conversion element can also be used in a lighting device. In such cases, the color conversion element need not be in the shape of a wheel because the color conversion element need not be rotated. Hereinafter, an example of the color conversion element used in a lighting device will be described.

FIG. 8 is a schematic diagram schematically illustrating the configuration of lighting device 100 according to Variation 4.

As illustrated in FIG. 8, lighting device 100 includes light source unit 101, light guiding component 102, and light conversion element 1D.

Light source unit 101 is a device which produces laser light and supplies the laser light to color conversion element 1D via light guiding component 102. For example, light source unit 101 is a semiconductor laser element which emits laser light having a wavelength of violet to blue (430 nm to 490 nm). Light guiding component 102 is a light guiding component which guides the laser light emitted by light source unit 101 to color conversion element 1D, and is an optical fiber, for instance.

Substrate 2d of color conversion element 1D has a quadrilateral shape when seen in plan view. Phosphor layer 3D is stacked above one of the principal surfaces of substrate 2d with joining portion 4d interposed therebetween, so as to cover the entire surface of substrate 2d. Phosphor layer 3D includes individual pieces 31d which are planarly arranged like substrate 2 seen in plan view. Individual pieces 31d have the same shape. Specifically, individual piece 31d has a quadrilateral shape when seen in plan view.

As described above, the stress caused when phosphor layer 3D and substrate 2d are heated can be distributed even in lighting device 100 according to Variation 4, because phosphor layer 3D also includes individual pieces 31d which are planarly arranged. In this manner, it is possible to reduce the warping amount of color conversion element 1D and the cracking and the peeling of joining portion 4d when phosphor layer 3D and substrate 2d are joined using metal or when laser light is received by phosphor layer 3D. Consequently, it is possible to reduce the occurrence of a defect resulting from joining phosphor layer 3D and substrate 2d using metal.

### [Other embodiments]

The above has described the color conversion element according to the present invention based on the embodiment and Variations 1 to 3 described above, yet the present invention is not limited to the embodiment and Variations 1 to 3 described above.

For example, an antireflection (AR) layer, such as an antireflection-coated film, can be stacked on the light emitting side of a surface of phosphor layer 3. In this manner, it is possible to improve the optical extraction efficiency of the color conversion element.

In addition, the forms obtained by applying various modifications to the embodiment which may be conceived by a person skilled in the art, and forms achieved by arbitrarily combining elements and functions in the embodiment and Variations 1 to 3, without departing from the scope of the present invention, are also included in the present invention.

### REFERENCE MARKS IN THE DRAWINGS

- 1, 1B, 1C, 1D: color conversion element
- 2, 2d: substrate
- 3, 3D: phosphor layer
- 4, 4b, 4d: joining portion
- 5: hard film
- 22: principal surface (one of the principal surfaces)
- 23: principal surface (the other principal surface)
- 31, 31d: individual piece
- 32: phosphor particles (phosphor)

## Claims

1. A color conversion element, comprising:
a substrate;
a phosphor layer disposed above one principal surface of the substrate; and
a joining portion interposed between the substrate and the phosphor layer for joining the substrate and the phosphor layer using metal, wherein
the phosphor layer includes individual pieces that are sheet-shaped and planarly arranged, the individual pieces each including at least one type of phosphor.

2. The color conversion element according to claim 1, wherein
the individual pieces have an identical shape.

3. The color conversion element according to claim 1 or 2, wherein
the individual pieces are annularly arranged.

4. The color conversion element according to any one of claims 1 to 3, wherein
the joining portion has a porous structure obtained by sintering metal nanoparticles.

5. The color conversion element according to any one of claims 1 to 4, wherein
a hard film is stacked on an other principal surface of the substrate.

6. The color conversion element according to any one of claims 1 to 5, wherein
a thermal expansion coefficient of the substrate is less than or equal to a thermal expansion coefficient of the phosphor layer.
